# EUROPÄISCHE PATENTSCHRIFT

(11) **EP 3 049 850 B1**
(45) Veröffentlichungstag und Bekanntmachung des Hinweises auf die Patenterteilung: **07.06.2023**
(21) Anmeldenummer: 14772393.6
(22) Anmeldetag: 25.09.2014
(51) Int. Cl.: G02B 27/00, G02B 27/01

(54) **BRILLENGLAS FÜR EINE AUF DEN KOPF EINES BENUTZERS AUFSETZBARE UND EIN BILD ERZEUGENDE ANZEIGEVORRICHTUNG SOWIE ANZEIGEVORRICHTUNG MIT EINEM SOLCHEN BRILLENGLAS**
SPECTACLES GLASS SUITABLE TO BE PLACED ON THE HEAD OF A USER AND A DISPLAY DEVICE GENERATING AN IMAGE AND ALSO A DISPLAY DEVICE FOR SUCH AN SPECTACLES GLASS
VERRE DE LUNETTES POUVANT ÊTRE PLACÉ SUR LA TÊTE D'UN UTILISATEUR ET UN SYSTÈME D'AFFICHAGE GÉNÉRANT UNE IMAGE, AINSI QU'UN SYSTÈME D'AFFICHAGE AVEC UN TEL VERRE

(30) Priorität: 27.09.2013 DE 102013219623
(43) Veröffentlichungstag der Anmeldung: 03.08.2016
(73) Patentinhaber: tooz technologies GmbH, 73430 Aalen (DE)
(72) Erfinder: DOBSCHAL, Hans-Jürgen, 99518 Bad Sulza (DE); LINDIG, Karsten, 99084 Erfurt (DE)
(74) Vertreter: Patentanwälte Geyer, Fehners & Partner mbB
(86) Internationale Anmeldenummer: PCT/EP2014/070554
(87) Internationale Veröffentlichungsnummer: WO 2015/044299

(56) Entgegenhaltungen:
- EP-A1- 1 385 023
- WO-A1-2006/025317
- WO-A1-2013/033274
- US-A- 5 801 885
- US-A1- 2008 094 586
- US-A1- 2013 250 429
- Anonymous: "Beam splitter - Wikipedia, the free encyclopedia", , 10 September 2013 (2013-09-10), XP55912225, Retrieved from the Internet: URL:https://web.archive.org/web/2013091009 5638/https://en.wikipedia.org/wiki/Beam_sp litter [retrieved on 2022-04-12]

## Beschreibung

Die vorliegende Erfindung betrifft ein Brillenglas für eine auf den Kopf eines Benutzers aufsetzbare und ein Bild erzeugende Anzeigevorrichtung gemäß dem Oberbegriff des Anspruches 1 sowie eine Anzeigevorrichtung mit einem solchen Brillenglas.

Solche Brillengläser weisen häufig, in Draufsicht auf das Brillenglas gesehen, einen Einkoppelabschnitt in einem Randbereich des Brillenglases und einen Auskoppelabschnitt in einem Mittelbereich des Brillenglases auf, wobei Lichtbündel von Pixeln des erzeugten Bildes, die über den Einkoppelabschnitt des Brillenglases in das Brillenglas eingekoppelt sind, im Brillenglas bis zum Auskoppelabschnitt geführt und über den Auskoppelabschnitt aus dem Brillenglas ausgekoppelt werden, um ein virtuelles Bild bereitzustellen. In der Praxis hat sich gezeigt, dass es schwierig ist, das Brillenglas einerseits möglichst dünn auszubilden und andererseits eine möglichst große Austrittspupille für die ausgekoppelten Lichtstrahlen bereitzustellen. In der Regel werden daher im Auskoppelabschnitt sogenannte Pupillenexpander ausgebildet, um die gewünschte Ausdehnung der Austrittspupille zu realisieren. Diese sind häufig als diffraktive Pupillenexpander ausgebildet, die einerseits eine starke Wellenlängenabhängigkeit zeigen und andererseits schwierig zu realisieren sind.

Die US 2008/0094586 A1 zeigt ein Brillenglas mit den Merkmalen des Oberbegriffs des Anspruches 1. Die US 2013/0250429 A1 und die WO 2006/025317 A1 zeigen jeweils Brillengläser mit einem Einkoppelabschnitt und einem lateral beabstandeten Auskoppelabschnitt. Die EP 1 385 023 A1 zeigt einen Lichtleiter für eine auf den Kopf eines Benutzers aufsetzbare Anzeigevorrichtung.

Ausgehend hiervon ist es daher Aufgabe der Erfindung, ein Brillenglas bereitzustellen, mit dem die eingangs genannten Schwierigkeiten möglichst vollständig behoben werden können.

Die Erfindung ist im Anspruch 1 und im Anspruch 13 definiert. Erfindungsgemäße Weiterbildungen sind in den abhängigen Ansprüchen angegeben.

Mit diesem Brillenglas kann in einfacher Art und Weise die gewünschte Aufweitung der Pupille erreicht werden, da mittels der Teilerschicht sichergestellt wird, dass die Lichtbündel (bzw. der jeweils transmittierte Teil jedes Lichtbündels) jeweils mehrfach lateral beabstandet auf die Facetten des Auskoppelabschnittes treffen, so dass nach erfolgter Umlenkung (mittels Reflexion) an den Facetten die gewünschte Auskopplung bei gleichzeitiger Verbreiterung der Austrittspupille vorliegt.

Der Auskoppelabschnitt wirkt somit als reflektiver Auskoppelabschnitt, da die reflektiven Facetten so vorgesehen sind, dass sie keinen bestimmungsgemäßen bzw. keinen gewünschten diffraktiven Effekt erzeugen.

Ferner können die Facetten als teilreflektive Facetten ausgebildet sein. Insbesondere kann die Reflektivität der Facetten in Richtung vom Einkoppel- zum Auskoppelabschnitt hin zunehmen.

Des weiteren ist es möglich, dass die Facetten als reflektive Facetten (möglichst mit 100% Reflexion) ausgebildet sind.

Die Facetten können in der Art direkt nebeneinander angeordnet sein, dass in Draufsicht auf die Facetten eine (im wesentlichen) kontinuierliche reflektive bzw. teilreflektive Schicht vorliegt. Alternativ können die benachbarten Facetten voneinander beabstandet sein, so dass zwischen ihnen transparente Lücken (in Draufsicht gesehen) vorliegen.

Bei dem erfindungsgemäßen Brillenglas kann die Reflexionsfläche die Vorderseite oder eine auf der Vorderseite aufgebrachte Reflexionsschicht sein.

Ferner ist es möglich, dass die Reflexionsfläche zwischen den beiden Grenzflächen der beiden Teilkörper ausgebildet ist.

Die Reflexion an der Rückseite und/oder die Reflexion an der Reflexionsfläche kann durch innere Totalreflexion bewirkt sein.

Die Facetten können an der Vorderseite des Brillenglaskörpers ausgebildet sein. Insbesondere können die Facetten als vergrabene Facetten ausgebildet sein. In diesem Fall sind die Vertiefungen, die durch die Facetten ausgebildet sind, mit dem Material des Brillenglaskörpers (bzw. des entsprechenden Teilkörpers) aufgefüllt, so dass eine glatte Vorderseite ausgebildet ist und insbesondere ist die Auffüllung derart durchgeführt, dass der ursprüngliche Krümmungsverlauf der Vorderseite auch im Bereich der vergrabenen Facetten vorliegt.

Die Reflexionsfläche kann plan oder gekrümmt ausgebildet sein.

Bei einer gekrümmten Ausbildung der Reflexionsfläche und/oder Teilerschicht kann dieses dazu genutzt werden, dass Abbildungsfehler bei der Abbildung der Lichtbündel korrigiert werden.

Die Reflexionsfläche und die Teilerschicht können durch die selbe Schicht verwirklicht sein.

Der Einkoppelabschnitt und/oder der Auskoppelabschnitt kann eine abbildende Wirkung aufweisen.

Des weiteren ist es möglich, dass der Einkoppelabschnitt eine Kollimationswirkung aufweist. Der Einkoppelabschnitt kann ferner refraktiv und/oder reflektiv sein.

Es ist möglich, die Einkopplung in das Brillenglas über eine Stirnseite, die Vorder- und Rückseite verbindet, durchzuführen. Insbesondere kann die Stirnseite eine abbildende Funktion aufweisen.

Das erfindungsgemäße Brillenglas kann aus Kunststoff oder Glas gebildet sein.

Unter einer Facette wird insbesondere ein Flächenstück, ein Flächenelement oder eine Fläche verstanden. Das Flächenstück, das Flächenelement bzw. die Fläche kann die beschriebene optische Wirkung der Facette bereitstellen.

Es wird ferner eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten Abbildungsoptik bereitgestellt, wobei die Abbildungsoptik ein erfindungsgemäßes Brillenglas aufweist und das erzeugte Bild im auf den Kopf aufgesetzten Zustand der Haltevorrichtung so abbildet, dass es der Benutzer als virtuelles Bild wahrnehmen kann.

Die Abbildungsoptik kann das Brillenglas als einziges optisches Element aufweisen. Es ist jedoch auch möglich, dass die Abbildungsoptik neben dem Brillenglas noch zumindest ein weiteres optisches Element umfaßt.

So kann das weitere optische Element z.B. eine Kollimationsoptik sein, die zwischen dem Brillenglas und dem Bilderzeugungsmodul angeordnet ist, so dass die Lichtbündel vom Bilderzeugungsmodul als kollimierte Bündel in das Brillenglas eingekoppelt werden können.

Insbesondere kann die Abbildungsoptik so ausgelegt sein, dass die Ausdehnung aller Lichtbündel im Einkoppelabschnitt möglichst gering ist. Dies kann insbesondere dadurch erreicht werden, dass die Eintrittspupille der Abbildungsoptik in den Bereich des Einkoppelabschnittes gelegt ist.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Der Bildgeber kann selbstleuchtend oder nicht selbstleuchtend sein.

Das Bilderzeugungsmodul kann insbesondere so ausgebildet sein, dass es ein monochromatisches oder ein mehrfarbiges Bild erzeugt.

Die erfindungsgemäße Anzeigevorrichtung kann weitere, dem Fachmann bekannte Elemente aufweisen, die zu ihrem Betrieb notwendig sind.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische perspektivische Darstellung einer Ausführungsform der erfindungsgemäßen Anzeigevorrichtung;
- Fig. 2: eine Detailschnittansicht des ersten Brillenglases 3 von Fig. 1;
- Fig. 3: eine Detailvergrößerung eines Teils des Auskoppelabschnitts 26 gemäß Fig. 2;
- Fig. 4-8: Schnittansichten des ersten Brillenglases 3 zur Erläuterung der unterschiedlichen Auskopplungen mittels des Auskoppelabschnitts;
- Fig. 9-11: Ansichten der Austrittspupille bei gleicher Position der Augenpupille für unterschiedliche Feldpunkte;
- Fig. 12-14: entsprechende Ansichten wie Fig. 9-11 mit horizontal verschobenem Ort der Augenpupille, und
- Fig. 15: eine Darstellung gemäß Fig. 3 zur Erläuterung einer Abwandlung der Ausbildung der Facetten 27 des Auskoppelabschnitts 26.

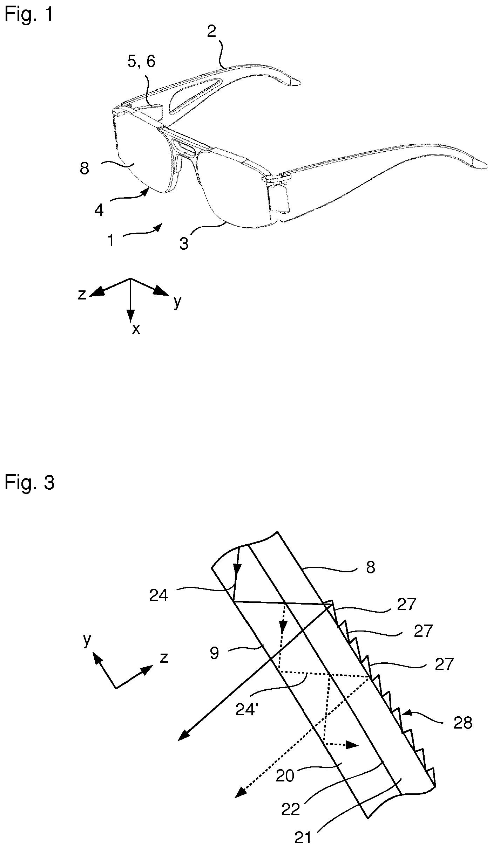

Bei der in Fig. 1 gezeigten Ausführungsform umfaßt die erfindungsgemäße Anzeigevorrichtung 1 eine auf den Kopf eines Benutzers aufsetzbare Haltevorrichtung 2, die z.B. in Art eines herkömmlichen Brillengestells ausgebildet sein kann, sowie ein erstes und ein zweites Brillenglas 3, 4, die an der Haltevorrichtung 2 befestigt sind. Die Haltevorrichtung 2 mit den Brillengläsern 3 und 4 kann z.B. als Sportbrille, Sonnenbrille und/oder Brille zur Korrektur einer Fehlsichtigkeit ausgebildet sein, wobei dem Benutzer über das erste Brillenglas 3 ein virtuelles Bild in sein Gesichtsfeld eingespiegelt werden kann, wie nachfolgend beschrieben wird.

Die Brillengläser 3 und 4 und insbesondere das linke Brillenglas 3 sind nur beispielshalber zusammen mit der erfindungsgemäßen Anzeigevorrichtung 1 beschrieben. Die Brillengläser 3, 4 bzw. zumindest das linke Brillenglas sind jeweils für sich als erfindungsgemäßes Brillenglas 3, 4 ausgebildet. Das erfindungsgemäße linke Brillenglas 3 kann natürlich auch als rechtes Brillenglas ausgebildet sein.

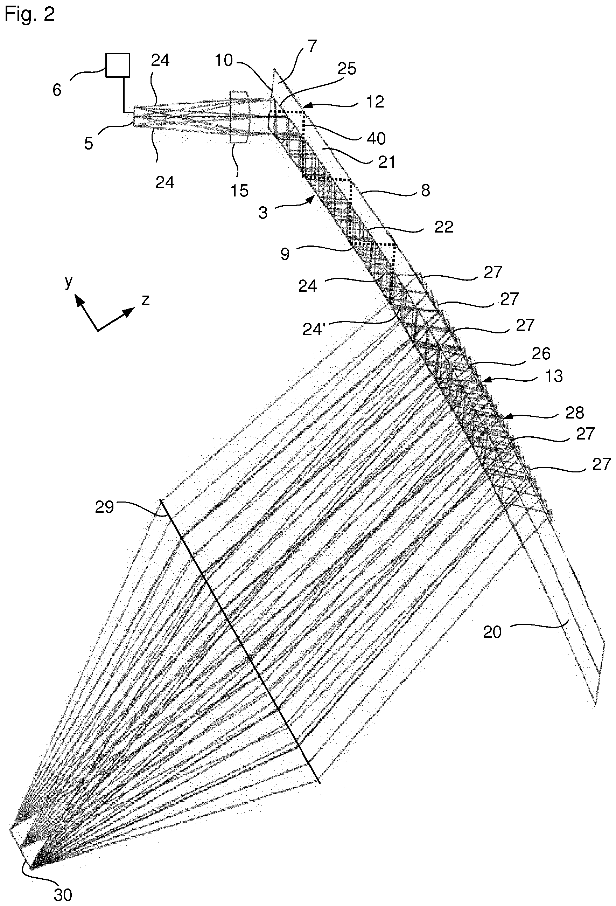

Wie am besten aus der Detailschnittansicht des ersten (linken) Brillenglases 3 in Fig. 2 ersichtlich ist (die Haltevorrichtung 2 ist nicht dargestellt), umfaßt die Anzeigevorrichtung 1 ein Bilderzeugungsmodul 5, eine Steuereinheit 6 sowie eine Einkoppeloptik 15. Das Bilderzeugungsmodul 5, die Steuereinheit 6 und die Einkoppeloptik 15 sind rein schematisch dargestellt und bevorzugt an der Haltevorrichtung 2 befestigt. Das Bilderzeugungsmodul 5 kann z.B. einen flächigen Lichtmodulator (wie z.B. einen OLED-, CMOS- oder LCoS-Chip oder eine Kippspiegelmatrix) mit einer Vielzahl von z.B. in Spalten und Zeilen angeordneten Pixeln aufweisen. Von jedem Pixel kann ein Lichtbündel 24 ausgehen.

Das linke Brillenglas 3 weist einen Brillenglaskörper 7 mit einer gekrümmten Vorderseite 8, einer gekrümmten Rückseite 9 und einer Stirnseite 10 auf. Der Brillenglaskörper 7 ist zweiteilig ausgebildet und umfaßt einen inneren Teilkörper 20 und einen äußeren Teilkörper 21. Die einander zugewandten Seiten der beiden Teilkörper 20, 21 weisen entsprechende Krümmungen auf, so dass sie flächig miteinander verbunden werden können. Zwischen den beiden einander zugewandten Seiten ist eine Reflexionsschicht 22 (z.B. Titandioxid) angeordnet, die sich vom Randbereich 12 bis zum Mittelbereich 13 des Brillenglases 3 erstreckt. Am Randbereich 12 ist ein Einkoppelabschnitt 25 ausgebildet und im Mittelbereich 13 ist ein Auskoppelabschnitt 26 ausgebildet.

Wie der Darstellung in Fig. 2 zu entnehmen ist, laufen die Lichtbündel 24 vom Bilderzeugungsmodul 5 zur Einkoppeloptik 15, und treten über die Stirnseite 10 und die Rückseite 9 so in das Brillenglas (hier innerer Teilkörper 20) ein, dass sie von der Reflexionsschicht 22 zur Rückseite 9 unter einem Winkel reflektiert werden, unter dem eine innere Totalreflexion an der Rückseite 9 stattfindet. Die Lichtbündel werden somit zwischen der Reflexionsschicht 22 und der Rückseite 9 hin und her reflektiert und dadurch bis zum Auskoppelabschnitt 26 geführt.

Im Bereich des Auskoppelabschnittes 26 ist die Reflexionsschicht 22 als Teilerschicht 22 ausgebildet, die einen Teil jeder auf sie treffenden Lichtbündel 24 reflektiert und einen Teil transmittiert. Der transmittierte Teil läuft durch den äußeren Teilkörper 21 und trifft auf Facetten 27 einer Fresnel-Struktur 28, die an der Vorderseite 9 im Bereich des Auskoppelabschnittes 26 ausgebildet ist. Die Facetten 27 sind teilreflektiv ausgebildet und bewirken (durch Reflexion) eine Strahlengangfaltung in Richtung zur Teilerschicht 22 und Rückseite 9 derart, dass der so reflektierte Teil der Lichtbündel 24 durch die Teilerschicht 22 und die Rückseite 9 (da aufgrund des kleinen Einfallswinkels keine innere Totalreflexion an der Rückseite 9 mehr stattfindet) hindurchläuft und dadurch ausgekoppelt wird.

Der von der Teilerschicht 22 reflektierte Teil wird an der Rückseite 9 totalreflektiert und trifft somit lateral versetzt (also in Richtung vom Einkoppel- zum Auskoppelabschnitt 25, 26 versetzt) als Lichtbündel 24' erneut auf die Teilerschicht 22, wo wiederum ein Teil transmittiert und ein Teil reflektiert wird. Der transmittierte Teil des Lichtbündels 24' trifft lateral versetzt auf weitere Facetten 27 und wird von diesen wiederum so umgelenkt, dass eine Auskopplung erfolgt. Der von der Teilerschicht 22 reflektierte Teil des Lichtbündels 24' trifft lateral versetzt erneut auf die Rückseite 9 und wird von dieser totalreflektiert. Diese Wirkungsweise der Teilerschicht 22 ist in der vergrößerten Detailansicht in Fig. 3 nochmals schematisch dargestellt, wobei das Lichtbündel 24' gestrichelt gezeigt ist.

In dieser Art und Weise wird mittels der Fresnel-Struktur 28, der Teilerschicht 22 und der Rückseite 9 im Bereich des Auskoppelabschnitts 26 ein Pupillenexpander realisiert, so dass eine große Ausdehnung der Austrittspupille 29 in lateraler Richtung realisiert werden kann.

Diese Vergrößerung der Austrittspupille 29 wird bei dem erfindungsgemäßen Brillenglas 3 durchgeführt, da aufgrund der sehr dünnen Ausbildung des Brillenglaskörpers 7 ein Bündeldurchmesser einer einzelnen Auskopplung nicht ausreichend ist, um die Austrittspupille 29 zu füllen. Die Austrittspupille 29 kann auch als Eyebox bezeichnet werden. Dies ist der Bereich, der durch die Anzeigevorrichtung 1 bereitgestellt wird und in dem sich das Auge des Benutzers bewegen kann und er stets noch das ausgekoppelte Bild wahrnehmen kann. Pro Feldpunkt (bzw. Pixel des darzustellenden Bildes) sind daher beispielsweise zwei oder drei benachbarte Auskopplungen notwendig, um die an einer Stelle in der Eyebox 29 positionierte Augenpupille des Benutzers zu füllen. Diese z.B. zwei oder drei Auskopplungen sollten daher auf den gleichen (innerhalb der Augenauflösung liegenden) Bildpunkt auf der Netzhaut abgebildet werden. Es soll also Deckungsgleichheit vorliegen. Hierunter wird insbesondere verstanden, dass im Rahmen einer Augenauflösung von kleiner als 1 min der gleiche Ort auf der Netzhaut getroffen wird. Man kann auch sagen, dass für diese benachbarten Auskopplungen für einen Feldpunkt der gleiche Hauptstrahlenwinkel vorliegt.

Die Reflexionsschicht 22 kann im Bereich zwischen Einkoppel- und Auskoppelabschnitt 25, 26 in gleicher Weise wie im Bereich des Auskoppelabschnitts 26 als Teilerschicht ausgebildet sein, die einen Teil des auf sie treffenden Lichtbündels reflektiert und einen Teil transmittiert. In Fig. 2 ist nur der reflektierte Teil dargestellt. Alternativ kann die Reflexionsschicht zwischen dem Einkoppel- und Auskoppelabschnitt 25, 26 so ausgebildet sein, dass sie als totalreflektierende Schicht in der Art wirkt, dass sie ab einem vorbestimmten Einfallswinkel die Lichtbündel 24 reflektiert und Licht mit einem Einfallswinkel kleiner als den vorbestimmten Einfallswinkel transmittiert. In diesem Fall kann ein Benutzer der Anzeigevorrichtung auch durch den Bereich der Reflexionsschicht zwischen dem Einkoppel- und Auskoppelabschnitt 25, 26 hindurchblicken. Ferner kann die Reflexionsschicht zwischen Einkoppel- und Auskoppelabschnitt 25, 26 jede andere gewünschte Reflektivität (von größer als 0% bis 100%) aufweisen.

Die Reflexionsschicht 22 kann sich auch im Bereich des Einkoppelabschnitts 25 erstrecken. Hier ist sie bevorzugt als Reflexionsschicht ausgebildet, die die auf sie fallenden Lichtbündel komplett reflektiert (also eine möglichst 100%ige Reflexion). Dies ist ohne Beeinträchtigung für den Benutzer möglich, da er in diesen Randbereich nicht durch das Brillenglas blickt. Insbesondere kann sich dieser Randbereich z.B. im Bereich des seitlichen Brillenbügels bzw. des entsprechenden Gelenks der Haltevorrichtung 2 befinden.

Bei der beschriebenen Ausführungsform erfolgt die Einkopplung der Lichtbündel zum Teil über die Rückseite 9 und zum Teil über die Stirnseite 10 (hier Abschnitt der Stirnseite 10 des inneren Teilkörpers 20). Natürlich kann die Einkopplung auch so erfolgen, dass sie entweder nur über die Stirnseite 10 oder nur über die Rückseite 9 durchgeführt wird.

In Fig. 2 ist noch die Position 30 der Netzhaut eines Auges eines die Anzeigevorrichtung 1 tragenden Benutzers eingezeichnet, um zu verdeutlichen, dass die mehreren Auskopplungen für jeden Feldpunkt in der Netzhaut deckungsgleich sind.

Die Fresnel-Struktur 28 kann so ausgebildet sein, dass sie neben der Strahlumlenkung auch eine abbildende Funktion realisiert. Dies kann dadurch erreicht werden, dass man von einer gekrümmten reflektiven Fläche ausgeht, die die gewünschten Abbildungseigenschaften aufweist, und dann diese durch die Facetten 27 nachstellt. Dabei können die einzelnen Facetten 27 plan oder gekrümmt sein. Ein derartiges Vorgehen ist beispielsweise in der WO 2010/097442 A1 und in der WO 2010/097439 A1 beschrieben, wobei die entsprechenden Beschreibungen und Figuren dieser Druckschriften hiermit in die vorliegende Offenbarung aufgenommen wird.

Der Brillenglaskörper 7 gemäß Fig. 2 kann eine Dicke von beispielsweise 2,0 mm aufweisen. Der Betrag der Krümmungsradien von Vorder- und Rückseite 8, 9 beträgt 90 mm. Das erzeugte Sichtfeld (field of view) beträgt 10° × 4°. Als Material für den Brillenglaskörper 7 kann z.B. PMMA verwendet werden. Der Durchmesser und somit die maximale laterale Ausdehnung der Eyebox beträgt 7 mm und es finden maximal fünf Auskopplungen statt, um die Augenpupille zu füllen, wobei die Augenpupille mit einem Durchmesser von 2 bis 3 mm angenommen wird.

Die Teilerschicht 22 ist insbesondere so ausgebildet, dass sie im Bereich des Auskoppelabschnittes 26 eine steigende Durchlaßtransmission (und somit eine abnehmbare Reflektivität) in der Richtung vom Einkoppel- zum Auskoppelabschnitt 26 hin aufweist.

Ferner kann die Form der einander zugewandten Seiten des inneren und äußeren Teilkörpers 20, 21 und somit die Form der Reflexionsschicht 22 für die Abbildung des mittels des Bilderzeugungsmoduls 5 erzeugten Bildes als virtuelles Bild bei der Optimierung der Abbildungseigenschaften, die durch das erfindungsgemäße Brillenglas 3 bereitgestellt werden, berücksichtigt werden. So kann die Reflexionsschicht 22 z.B. als Freiformfläche (die z.B. in zwei orthogonalen Schnitten oder zwei Hauptschnitten unterschiedliche Krümmungen aufweist) gestaltet werden, wodurch eine deutliche Verbesserung der Abbildungsqualität bei der Einspiegelung ohne Beeinflussung der Durchlichtabbildungsqualität (die nur durch die Vorder- und Rückseite 8, 9 bestimmt ist) möglich ist.

So kann z.B. die Krümmung der Rückseite 9, die häufig für die Fehlsichtigkeitskorrektur eingesetzt werden, durch entsprechende Ausbildung der Krümmung der Reflexionsschicht 22 kompensiert werden, ohne dass die Durchlichtabbildungseigenschaften beeinflußt werden. Auch kann z.B. die Krümmung der Vorderseite 8 mit berücksichtigt werden, falls erforderlich, so dass für den Benutzer auch das virtuelle Bild die gewünschte Fehlsichtigkeitskorrektur nach Durchlaufen der Rückseite 9 aufweist.

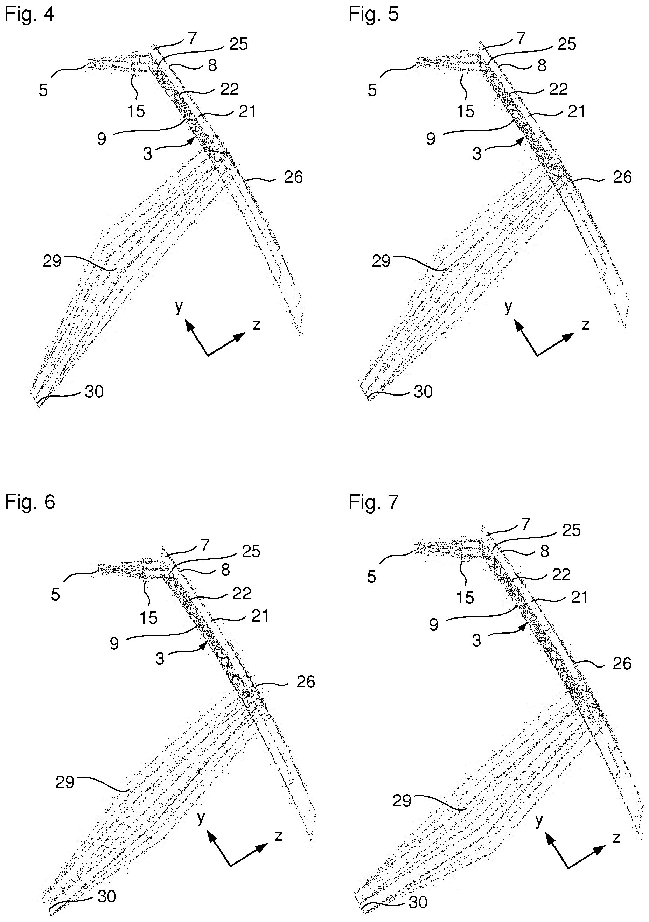

In den Darstellungen in Fig. 4 bis 8 sind die fünf verschiedenen Auskopplungen für die beiden Randfeldpunkte und die Feldmitte dargestellt. Alle weiteren Auskopplungen erreichen das Auge nicht mehr und sind daher auch nicht mehr dargestellt.

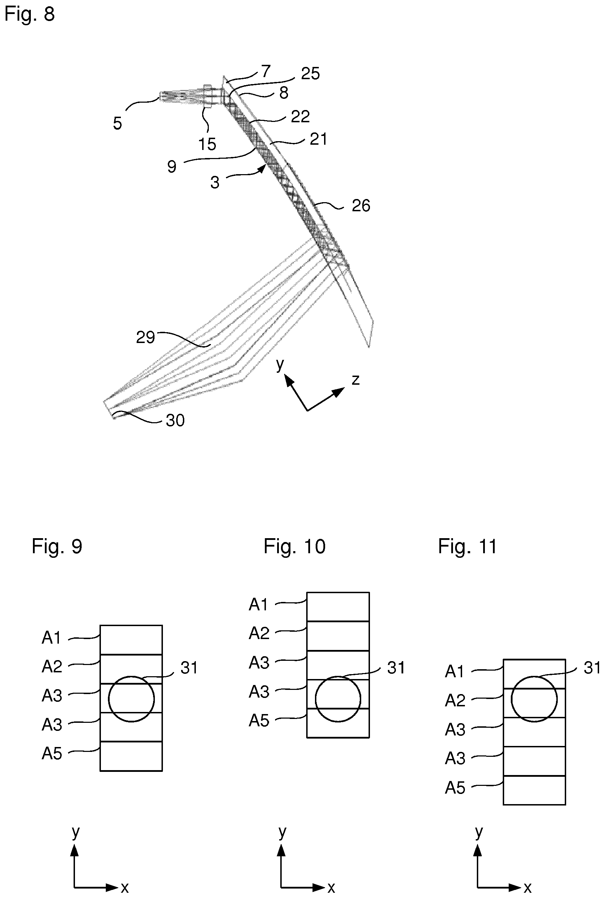

In Fig. 9 ist die Ausleuchtung der Pupille 31 des Auges des Benutzers gezeigt, wenn sie in der Mitte der Eyebox 29 positioniert ist, wobei die fünf Auskopplungen mit A1, A2, A3, A4 und A5 bezeichnet werden. Wie der Abbildung in Fig. 9 entnommen werden kann, trägt die dritte Auskopplung (A3) am meisten zur Abbildung bei, wobei noch ergänzend kleine Teile der zweiten und vierten Auskopplung (A2, A4) hinzukommen.

In Fig. 10 ist in ähnlicher Weise wie in Fig. 9 dargestellt, welche Auskopplungen für das Lichtbündel des unteren Feldrandes (-5°) zur Bildentstehung beitragen. Hierbei handelt es sich im wesentlichen um die vierte und fünfte Auskopplung A4, A5. In Fig. 11 ist die gleiche Darstellung für den oberen Feldrand (+5°) gezeigt. Daraus ergibt sich, dass die erste und zweite Auskopplung A1, A2 wahrgenommen werden.

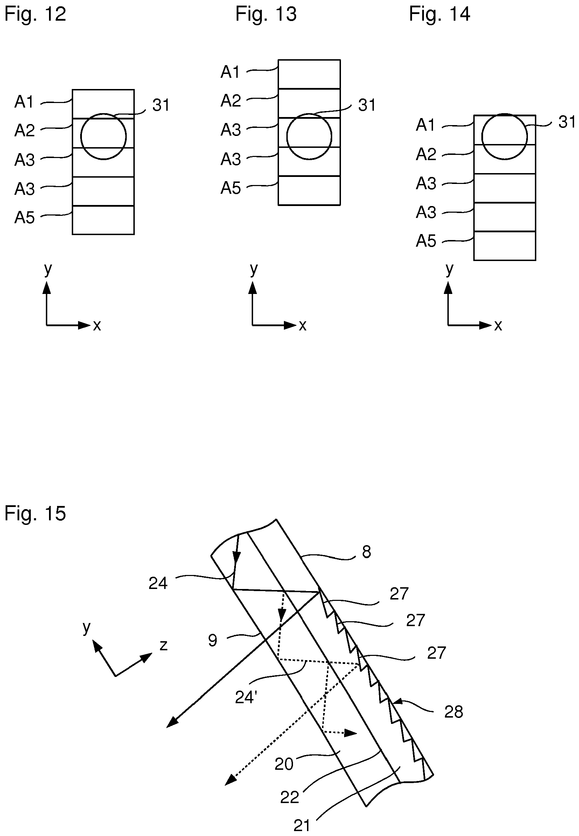

In den Fig. 12 bis 14 sind entsprechende Darstellungen bei einem horizontal verschobenen Ort (in y-Richtung) der Augenpupille 31 innerhalb der Eyebox 29 gezeigt.

In einer Abwandlung der bisher beschriebenen Ausführungsformen ist die Reflexionsschicht 22 vom Einkoppelabschnitt 25 bis kurz vor dem Auskoppelabschnitt 26 transparent ausgebildet bzw. nicht vorgesehen, so dass in diesem Bereich die Lichtführung durch innere Totalreflexion an der Vorder- und Rückseite 8, 9 stattfindet (in Fig. 2 durch die gestrichelte Linie 40 angedeutet).

Erst im Bereich des Auskoppelabschnitts 26 wirkt dann die Reflexionsschicht 22 als Teilerschicht in der bereits beschriebenen Art und Weise, so dass ein Teil jedes auf sie treffenden Lichtbündels 24 transmittiert und ein Teil reflektiert wird (der Strahlverlauf ist danach gleich zur bisher beschriebenen Ausführungsform, so dass die Linie 40 im Bereich des Auskoppelabschnitts nicht mehr eingezeichnet ist). Der transmittierte Teil trifft auf die Fresnel-Struktur 28, wird von dieser umgelenkt und damit zur Austrittspupille 29 hin ausgekoppelt. Der reflektierte Teil wird an der Rückseite erneut zur Teilerschicht 22 hin reflektiert, so dass die gewünschte Verbreiterung der Austrittspupille 29 stattfindet. Die Teilerschicht 22 ist wiederum so ausgelegt, dass sie in der Richtung vom Einkoppel- zum Auskoppelabschnitt 25, 26 eine steigende Transmission und somit eine abnehmende Reflektivität aufweist.

Die Facetten 27 sind bei den bisher beschriebenen Ausführungsformen auf der Vorderseite 8 ausgebildet. Es ist jedoch auch möglich, dass die Facetten 27 in dem Brillenglaskörper 7 und insbesondere im äußeren Teilkörper 21 ausgebildet sind, wie in der schematischen Darstellung in Fig. 15 angedeutet ist. Fig. 15 entspricht im wesentlichen der Darstellung von Fig. 3, wobei jedoch nun die Facetten 27 als vergrabene Facetten 27 im Brillenglaskörper 7 ausgebildet sind. Die durch die Facetten 27 gebildeten Vertiefungen sind bevorzugt aufgefüllt, so dass im Auskoppelbereich 26 der ursprüngliche Krümmungsverlauf der Vorderseite 8 vorliegt. Dadurch treten keine unerwünschten Brechungen im Bereich des Auskoppelabschnittes 26 bei Betrachtung der Umgebung durch das Brillenglas 3 auf.

Bei den bisherigen Ausführungsformen sind die Facetten 27 als teilreflektive Facetten ausgebildet. Sie können jedoch auch als reflektive Facetten (möglichst mit einer Reflexion von 100%) ausgebildet sein. In diesem Fall ist keine Durchlichtbetrachtung im Bereich des Auskoppelabschnittes für den Betrachter möglich. Jedoch ist es ferner möglich, die teilreflektiven oder reflektiven Facetten 27 nicht nur in der beschriebenen Art und Weise so anzuordnen, dass in Draufsicht gesehen eine durchgehende teilreflektive oder reflektive Fläche gebildet ist, sondern voneinander beabstandet, so dass zwischen zwei Facetten 27 jeweils ein transmissiver Bereich ohne Facetten 27 vorliegt. In diesem Fall ist selbst bei der Ausbildung der Facetten 27 als reflektive Facetten 27 auch noch eine Durchlichtbetrachtung durch den Auskoppelabschnitt 26 möglich.

Bei den beschriebenen Ausführungsformen der erfindungsgemäßen Anzeigevorrichtung 1 erfolgt die Einspiegelung des virtuellen Bildes in das Gesichtsfeld des Benutzers über das linke Brillenglas 3. Natürlich ist auch eine Einspiegelung über das rechte Brillenglas 4 möglich. Des weiteren kann die Anzeigevorrichtung 1 so ausgebildet sein, dass Informationen (bzw. virtuelle Bilder) über beide Brillengläser 3, 4 eingespiegelt werden. Dabei kann die Einspiegelung so erfolgen, dass ein dreidimensionaler Bildeindruck besteht. Die Brillengläser 3, 4 können eine Brechkraft von Null oder eine von Null verschiedene Brechkraft (insbesondere zur Korrektur von Fehlsichtigkeiten) aufweisen. Die Brillengläser 3, 4 können z.B. aus einem Glas oder auch aus Kunststoff hergestellt sein und können natürlich bei anderen auf den Kopf des Benutzers aufsetzbaren Anzeigevorrichtungen verwendet werden.

## Patentansprüche

1. Brillenglas für eine auf den Kopf eines Benutzers aufsetzbare und ein Bild erzeugende Anzeigevorrichtung (1),
mit einem eine Vorderseite (8) und eine Rückseite (9) aufweisenden Brillenglaskörper (7), wobei der Brillenglaskörper (7) einen ersten und einen zweiten Teilkörper (20, 21) aufweist, deren einander zugewandte Grenzflächen miteinander verbunden sind,
mit, in Draufsicht auf das Brillenglas (3, 4) gesehen, einem Einkoppelabschnitt (25) in einem Randbereich (12) des Brillenglases (3, 4) und einem reflektiven Auskoppelabschnitt (26), der reflektive Facetten (27) aufweist, in einem Mittelbereich (13) des Brillenglases (3, 4),
und mit einer zwischen den beiden Grenzflächen im Bereich des Auskoppelabschnittes (26) angeordneten Teilerschicht (22),
wobei das Brillenglas (3, 4) dazu geeignet ist, Lichtbündel von Pixeln des erzeugten Bildes, die über den Einkoppelabschnitt (25) des Brillenglases (3, 4) in das Brillenglas (3, 4) eingekoppelt sind, im Brillenglas (3, 4) durch Reflexionen an der Rückseite (9) und einer dieser gegenüberliegenden Reflexionsfläche (8, 22) zum Auskoppelabschnitt (26) zu führen und über den Auskoppelabschnitt (28) aus dem Brillenglas (3, 4) auszukoppeln,
wobei die Teilerschicht (22) von von der Rückseite (9) reflektierten Lichtbündeln (24) jeweils einen Teil zur Rückseite (9) hin reflektiert und ein Teil transmittiert, wobei der reflektierte Teil nach Reflexion an der Rückseite erneut auf die Teilerschicht (22) trifft und dort wiederum zum Teil zur Rückseite (9) hin reflektiert und zum Teil transmittiert wird, wobei die transmittierten Teile auf die Facetten (27) treffen, die eine Reflexion in Richtung zur Rückseite (9) so bewirken, dass die von den Facetten (27) reflektierten Teile durch die Teilerschicht (22) und die Rückseite (9) aus dem Brillenglas (3, 4) ausgekoppelt werden,
**dadurch gekennzeichnet, dass**
die Vorderseite (8) und/oder die Rückseite (9) gekrümmt sind/ist und
die Teilerschicht (22) gekrümmt ausgebildet ist.

2. Brillenglas nach Anspruch 1, bei dem
die Durchlaßtransmission der Teilerschicht (22) in Richtung vom Einkoppel- zum Auskoppelabschnitt (25, 26) hin steigt und somit die Reflektivität der Teilerschicht (22) in Richtung vom Einkoppel- zum Auskoppelabschnitt (25, 26) hin abnimmt.

3. Brillenglas nach Anspruch 1 oder 2, bei dem die Facetten (27) als teilreflektive Facetten (27) ausgebildet sind.

4. Brillenglas nach Anspruch 3, bei dem die Reflektivität der Facetten (27) in Richtung vom Einkoppel- zum Auskoppelabschnitt (25, 26) hin zunimmt.

5. Brillenglas nach einem der obigen Ansprüche, bei dem die Reflexionsfläche (8) die Vorderseite (8) ist.

6. Brillenglas nach einem der obigen Ansprüche, bei dem die Reflexionsfläche zwischen den beiden Grenzflächen der beiden Teilkörper (20, 21) ausgebildet ist.

7. Brillenglas nach einem der obigen Ansprüche, bei dem die durch die Facetten (27) gebildeten Vertiefungen mit Material des Teilkörpers, in dem die Facetten (27) ausgebildet sind, so aufgefüllt sind, dass eine glatte Vorderseite (8) ausgebildet ist.

8. Brillenglas nach einem der obigen Ansprüche, bei dem die Reflexionsfläche (8, 22) plan ausgebildet ist.

9. Brillenglas nach einem der obigen Ansprüche, bei dem der Einkoppelabschnitt (25) und/oder der Auskoppelabschnitt (26) eine abbildende Wirkung aufweisen/aufweist.

10. Brillenglas nach einem der obigen Ansprüche, bei dem der Einkoppelabschnitt (25) eine Kollimationswirkung aufweist.

11. Brillenglas nach einem der obigen Ansprüche, bei dem der Einkoppelabschnitt (25) refraktiv und/oder reflektiv ist.

12. Brillenglas nach einem der obigen Ansprüche, bei dem die Reflexionsfläche und die Teilerschicht durch die selbe Schicht verwirklicht sind.

13. Anzeigevorrichtung mit
einer auf den Kopf eines Benutzers aufsetzbaren Haltevorrichtung (2),
einem an der Haltevorrichtung (2) befestigten Bilderzeugungsmodul (25), das ein Bild erzeugt, und
einer an der Haltevorrichtung (2) befestigten Abbildungsoptik, die ein Brillenglas (3, 4) nach einem der obigen Ansprüche aufweist und die das erzeugte Bild im auf den Kopf aufgesetzten Zustand der Haltevorrichtung (2) so abbildet, dass es der Benutzer als virtuelles Bild wahrnehmen kann.

## Claims

1. Spectacle lens for a display device (1) that can be fitted on the head of a user and generates an image,
with a spectacle lens body (7) comprising a front side (8) and a rear side (9), wherein the spectacle lens body (7) comprises a first and a second partial body (20, 21), the mutually facing boundary surfaces of which are connected to each other,
with, seen in top view onto the spectacle lens (3, 4), a coupling-in section (25) in an edge area (12) of the spectacle lens (3, 4) and a reflective coupling-out section (26), which comprises reflective facets (27), in a central area (13) of the spectacle lens (3, 4),
and with a splitter layer (22) arranged between the two boundary surfaces in the area of the coupling-out section (26),
wherein the spectacle lens (3, 4) is suitable for guiding light bundles of pixels of the generated image, which are coupled into the spectacle lens (3, 4) via the coupling-in section (25) of the spectacle lens (3, 4), in the spectacle lens (3, 4) by reflections on the rear side (9) and a reflecting surface (8, 22) lying opposite this to the coupling-out section (26) and coupling them out of the spectacle lens (3, 4) via the coupling-out section (28),
wherein the splitter layer (22) in each case reflects a portion of light bundles (24) reflected by the rear side (9) towards the rear side (8) and transmits a portion, wherein after reflection on the rear side the reflected portion strikes the splitter layer (22) again and there, once again, is partially reflected towards the rear side (9) and partially transmitted, wherein the transmitted portions strike the facets (27), which bring about a reflection in the direction of the rear side (9) such that the portions reflected by the facets (27) are coupled out of the spectacle lens (3, 4) through the splitter layer (22) and the rear side (9),
**characterized in that**
the front side (8) and/or the rear side (9) is/are curved and
the splitter layer (22) is formed curved.

2. Spectacle lens according to claim 1, in which the transmissivity of the splitter layer (22) increases in the direction from the coupling-in to the coupling-out section (25, 26) and thus the reflectivity of the splitter layer (22) decreases in the direction from the coupling-in to the coupling-out section (25, 26).

3. Spectacle lens according to claim 1 or 2, in which the facets (27) are formed as partially reflective facets (27).

4. Spectacle lens according to claim 3, in which the reflectivity of the facets (27) increases in the direction from the coupling-in to the coupling-out section (25, 26).

5. Spectacle lens according to one of the above claims, in which the reflecting surface (8) is the front side (8).

6. Spectacle lens according to one of the above claims, in which the reflecting surface is formed between the two boundary surfaces of the two partial bodies (20, 21).

7. Spectacle lens according to one of the above claims, in which the depressions formed by the facets (27) are filled in with material of the partial body, in which the facets (27) are formed, such that a smooth front side (8) is formed.

8. Spectacle lens according to one of the above claims, in which the reflecting surface (8, 22) is formed flat.

9. Spectacle lens according to one of the above claims, in which the coupling-in section (25) and/or the coupling-out section (26) has/have an imaging effect.

10. Spectacle lens according to one of the above claims, in which the coupling-in section (25) has a collimation effect.

11. Spectacle lens according to one of the above claims, in which the coupling-in section (25) is refractive and/or reflective.

12. Spectacle lens according to one of the above claims, in which the reflecting surface and the splitter layer are implemented by the same layer.

13. Display device with
a holder (2) that can be fitted on the head of a user,
an image-generating module (25) secured to the holder (2), which generates an image, and
an imaging optical system secured to the holder (2), which comprises a spectacle lens (3, 4) according to one of the above claims and which, when the holder (2) is fitted on the head, images the generated image such that the user can perceive it as a virtual image.

## Revendications

1. Verre de lunettes destiné à un dispositif d'affichage (1) qui peut être placé sur la tête d'un utilisateur et qui génère une image, ledit verre de lunettes comprenant
un corps de verre de lunettes (7) qui est pourvu d'un côté avant (8) et d'un côté arrière (9), le corps de verre de lunettes (7) comportant une première et une deuxième partie de corps (20, 21) dont les surfaces limites, dirigées l'une vers l'autre, sont reliées entre elles,
dans une vue de dessus du verre de lunettes (3, 4), une portion d'injection par couplage (25) dans une zone de bord (12) du verre de lunettes (3, 4) et une portion de sortie par couplage réfléchissante (26) qui comporte des facettes réfléchissantes (27), dans une zone centrale (13) du verre de lunettes (3, 4), et
une couche de séparation (22) qui est disposée entre les deux surfaces limites dans la zone de la portion de sortie par couplage (26),
le verre de lunettes (3, 4) étant approprié pour guider des faisceaux lumineux de pixels de l'image générée, qui ont été injectés par couplage dans le verre de lunettes (3, 4) par le biais de la portion d'injection par couplage (25) du verre de lunettes, dans le verre de lunettes (3, 4) en direction de la portion de sortie par couplage (26) par réflexion sur le côté arrière (9) et une surface réfléchissante (8, 22) opposée à celui-ci, et faire sortir par couplage lesdits faisceaux de lumière du verre de lunettes (3, 4) par le biais de la portion de sortie par couplage (28),
la couche de séparation (22) réfléchissant une partie des faisceaux lumineux (24) réfléchis par le côté arrière (9) en direction du côté arrière (9) et transmettant une partie, la partie réfléchie étant à nouveau incidente à la couche de séparation (22) après réflexion sur le côté arrière et étant à son tour réfléchie en partie en direction du côté arrière (9) et transmise en partie, les parties transmises étant incidentes aux facettes (27) qui provoquent une réflexion en direction du côté arrière (9) de sorte que les parties réfléchies par les facettes (27) sont amenée par couplage en sortie du verre de lunettes (3, 4) à travers la couche de séparation (22) et le côté arrière (9),
**caractérisé en ce que**
le côté avant (8) et/ou le côté arrière (9) sont incurvés et la couche de séparation (22) est incurvée.

2. Verre de lunettes selon la revendication 1, dans lequel
la transmission à travers de la couche de séparation (22) augmente dans le sens allant de la portion d'injection par couplage à la portion de sortie par couplage (25, 26) et ainsi la réflectivité de la couche de séparation (22) diminue dans le sens allant de la portion d'injection par couplage à la portion de sortie par couplage (25, 26).

3. Verre de lunettes selon la revendication 1 ou 2, dans lequel les facettes (27) sont conçues comme des facettes partiellement réfléchissantes (27).

4. Verre de lunettes selon la revendication 3, dans lequel la réflectivité des facettes (27) augmente dans le sens allant de la portion d'injection par couplage à la portion de sortie par couplage (25, 26).

5. Verre de lunette selon l'une des revendications précédentes, dans lequel la surface de réflexion (8) est le côté avant (8).

6. Verre de lunettes selon l'une des revendications précédentes, dans lequel la surface de réflexion est formée entre les deux surfaces limites des deux parties de corps (20, 21).

7. Verre de lunettes selon l'une des revendications précédentes, dans lequel les dépressions formées par les facettes (27) sont remplies de matière de la partie de corps dans laquelle les facettes (27) sont formées, de façon à former un côté avant lisse (8).

8. Verre de lunettes selon l'une des revendications précédentes, dans lequel la surface de réflexion (8, 22) est plane.

9. Verre de lunettes selon l'une des revendications précédentes, dans lequel la portion d'injection par couplage (25) et/ou la portion de sortie par couplage (26) ont un effet de reproduction.

10. Verre de lunettes selon l'une des revendications précédentes, dans lequel la portion d'injection par couplage (25) a un effet de collimation.

11. Verre de lunettes selon l'une des revendications précédentes, dans lequel la portion d'injection par couplage (25) est réfractive et/ou réfléchissante.

12. Verre de lunettes selon l'une des revendications précédentes, dans lequel la surface de réflexion et la couche de séparation sont réalisées par la même couche.

13. Dispositif d'affichage comprenant
un dispositif de retenue (2) qui peut être placé sur la tête d'un utilisateur,
un module de génération d'image (25) fixé au dispositif de retenue (2) et générant une image, et
une optique de reproduction qui est fixée au dispositif de retenue (2), qui comporte un verre de lunettes (3, 4) selon l'une des revendications précédentes et qui reproduit l'image générée lorsque le dispositif de retenue (2) est placé sur la tête de manière à ce que l'utilisateur puisse la percevoir comme une image virtuelle.
